# EUROPÄISCHE PATENTSCHRIFT

(11) **EP 3 019 376 B1**
(45) Veröffentlichungstag und Bekanntmachung des Hinweises auf die Patenterteilung: **17.05.2017**
(21) Anmeldenummer: 14730428.1
(22) Anmeldetag: 04.06.2014
(51) Int. Cl.: B60W 10/06, B60W 10/184, B60W 10/196, B60W 40/076, B60W 30/16

(54) **VERFAHREN UND VORRICHTUNG ZUR AUTOMATISCHEN REGELUNG EINER LÄNGSDYNAMIK EINES KRAFTFAHRZEUGS**
METHOD AND DEVICE FOR AUTOMATICALLY REGULATING A LONGITUDINAL DYNAMIC OF A MOTOR VEHICLE
PROCÉDÉ ET DISPOSITIF DE RÉGULATION AUTOMATIQUE D'UNE DYNAMIQUE LONGITUDINALE D'UN VÉHICULE À MOTEUR

(30) Priorität: 12.07.2013 DE 102013011623
(43) Veröffentlichungstag der Anmeldung: 18.05.2016
(73) Patentinhaber: WABCO GmbH, 30453 Hannover (DE)
(72) Erfinder: BAUM, Mathias, 30455 Hannover (DE); BREUER, Karsten, 88179 Oberreute (DE); KALLENBACH, Stephan, 30161 Hannover (DE)
(74) Vertreter: Lauerwald, Jörg
(86) Internationale Anmeldenummer: PCT/EP2014/001517
(87) Internationale Veröffentlichungsnummer: WO 2015/003767

(56) Entgegenhaltungen:
- EP-A2- 1 053 903
- WO-A1-2012/158097
- DE-A1- 4 209 060
- DE-A1- 19 654 769
- US-A1- 2012 065 863

## Beschreibung

Die Erfindung betrifft ein Verfahren zur automatischen Regelung einer Längsdynamik eines Kraftfahrzeugs, insbesondere eines Nutzfahrzeugs, mit den Schritten Ermitteln einer von der Fahrzeugbeschleunigung abhängigen ersten Zustandsgröße, Ermitteln einer von dem Antriebsmoment des Motors abhängigen zweiten Zustandsgröße, Ermitteln einer von dem Betriebszustand mindestens einer Dauerbremse abhängigen dritten Zustandsgröße, Ermitteln von Informationen über ein vorausfahrendes Fahrzeug, Einstellen mindestens eines Regelungsparameters der Regelung und Regeln der Längsdynamik des Fahrzeugs in Abhängigkeit von dem mindestens einen Regelungsparameter.

Ferner betrifft die Erfindung eine Vorrichtung zur automatischen Regelung einer Längsdynamik eines Kraftfahrzeugs, insbesondere eines Nutzfahrzeugs, mit einer ersten Sensiereinrichtung zum Ermitteln der Fahrzeuggeschwindigkeit, einer zweiten Sensiereinrichtung zum Ermitteln des Antriebsmoments des Motors, einer dritten Sensiereinrichtung zum Ermitteln des Betriebszustandes mindestens einer Dauerbremse, einer vierten Sensiereinrichtung zum Ermitteln von Informationen über ein vorausfahrendes Fahrzeug und einer Auswertungs-, Einstell- und Regeleinheit zum Auswerten der Fahrzeuggeschwindigkeit, des Antriebsmoments des Motors, des Betriebszustandes der mindestens einen Dauerbremse und der Informationen über das vorausfahrende Fahrzeug, Einstellen mindestens eines Regelungsparameters und Regeln der Längsdynamik des Fahrzeugs in Abhängigkeit des mindestens einen Regelungsparameters.

Derartige Verfahren und Vorrichtungen werden insbesondere bei Nutzfahrzeugen für Abstands- bzw. Geschwindigkeitsregelungen verwendet, welche in Abhängigkeit von dem vorausfahrenden Fahrzeug einen Geschwindigkeits- oder Beschleunigungswert einstellen. Diese Regelungssysteme werden auch als Abstandsregeltempomaten oder Automatische Distanzregler (ADR) bezeichnet, wobei sich auch der Ausdruck Adaptive Cruise Control (ACC) für solche Regelung durchgesetzt hat.
Adaptive Abstands- bzw. Geschwindigkeitsregelsysteme sind in der Lage auf das Bremssystem und/oder das Motormanagement zuzugreifen, sodass durch Beschleunigen und/oder Abbremsen des Fahrzeugs ein gewünschter Soll-Abstand zu dem vorausfahrenden Fahrzeug automatisch eingeregelt werden kann. Somit wird die allgemeine Fahrsicherheit durch Einhaltung einer ausreichenden Distanz zu dem vorausfahrenden Fahrzeug erhöht und der Bremsverschleiß und damit auch die Fahrzeugausfallzeiten reduziert.
Derartige Regelsysteme sind insbesondere dann vorteilhaft, wenn monotone Fahrmanöver über einen längeren Zeitraum hinweg ausgeführt werden müssen, welche zur Ermüdung und somit zu einer reduzierten Reaktionsfähigkeit des Fahrzeugführers führen können. Monotone und ermüdende Fahrmanöver sind häufig bei Transportfahrten mit Nutzfahrzeugen oder beim Führen von Stadt- oder Reisebussen auszuführen.
DE 10 2010 055 373 A1 beschreibt ein Verfahren zur Regelung einer Längsdynamik eines Kraftfahrzeugs gemäß einer oben beschriebenen adaptiven Abstands- bzw. Geschwindigkeitsregelung. Die gattungsgemäße DE4209060A1 betrifft ein Verfahren zur Regelung des Abstands zwischen fahrenden Fahrzeugen, welches unabhängig von der Art der Abstandserfassung ist. Dabei werden die im Verlaufe einer aktuell aufrechterhaltenen Abstandsregelung erfolgenden Fahrereingriffe erfasst und bewertet. Dazu werden im Zuge des normalen Fahrbetriebs betätigte Steuermittel wie zum Beispiel das Gaspedal, das Bremspedal und der Blinker überwacht. Aus einer Bewertung festgestellter Betätigungen wird auf den aktuellen Fahrerwunsch geschlossen und dementsprechend die in den aktuell errechneten Sollabstand eingehende Reaktionszeit des Fahrers adaptiv korrigiert. Dadurch werden Totzeiten minimiert und eine schnellstmögliche Anpassung des Folgeabstands an ein wechselndes Fahrverhalten des Fahrers erreicht.

Es hat sich herausgestellt, dass das längsdynamische Verhalten eines ACCgeregelten Kraftfahrzeugs stark von Umgebungseinflüssen, wie beispielsweise der Straßenneigung oder den Windverhältnissen, abhängig ist. So ist bei den bekannten Regelungssystemen zu beobachten, dass während der Folgefahrt in der Ebene ein hoher Fahrkomfort gewährleistet und der gewünschte Folgeabstand zum vorausfahrenden Fahrzeug in zufriedenstellender Weise eingehalten werden kann.
Erfährt das Fahrzeug infolge der Straßenneigung während einer Bergabfahrt jedoch eine zusätzliche, nicht vom Antriebsmoment des Motors abhängige Beschleunigung, kann die Regelung den hohen Fahrkomfort nicht mehr aufrechterhalten und/oder der eingestellte bzw. gewünschte Abstand zu dem vorausfahrenden Fahrzeug wird häufig stark unterschritten. Aus der Unterschreitung des gewünschten Folgeabstandes resultiert ein plötzlicher und starker Bremseingriff des Regelsystems oder der Fahrer fühlt sich durch subjektives Empfinden genötigt, selbst bremsend einzugreifen, wodurch der Komfort weiter reduziert wird.

Folglich lassen sich bekannte Systeme auch so einstellen, dass zwar ein hoher Fahrkomfort während der Neigungsfahrt gewährleistet ist, dieser aber während der Fahrt in der Ebene nicht aufrechterhalten werden kann.

Eine adaptive und unter wirtschaftlichen Aspekten umsetzbare Abstands- bzw. Geschwindigkeitsregelung, welche hohen Komfort und ausreichende Folgeabstände sowohl bei der Fahrt in der Ebene als auch während der Bergabfahrt gewährleistet, ist nicht bekannt.

Aufgabe der vorliegenden Erfindung ist es, ein Verfahren und eine Vorrichtung anzugeben, welche das Vorhandensein von Umgebungseinflüssen, die die Regelung beeinflussen, erfasst und die Regelung an diese Umgebungseinflüsse anpasst, um einen hohen Komfort und ausreichende Folgeabstände während der Folgefahrt unabhängig von den Umgebungseinflüssen zu gewährleisten.

Die Aufgabe wird in einem ersten Aspekt durch ein Verfahren der eingangs genannten Art gelöst, wobei das Einstellen des mindestens einen Regelungsparameters der Regelung in Abhängigkeit der ersten, zweiten und dritten Zustandsgröße und der ermittelten Informationen über das vorausfahrende Fahrzeug erfolgt.

In Abhängigkeit der Fahrzeugbeschleunigung, des Antriebsmoments des Motors und des Betriebszustandes mindestens einer Dauerbremse kann ermittelt werden, ob auf das Fahrzeug Umgebungseinflüsse einwirken, welche zu einer zusätzlichen Beschleunigung des Fahrzeugs führen, wie beispielsweise eine geneigte Fahrbahn während einer Bergabfahrt. Wird eine positive Fahrzeugbeschleunigung ermittelt, während kein oder lediglich ein geringes Antriebsmoment des Motors vorliegt und der Betriebszustand der Dauerbremse oder der Dauerbremsen auf eine hohe Auslastung schließen lassen, so wirken äußere Einflüsse auf das Fahrzeug, welche zu einer nicht durch den Antriebsstrang hervorgerufenen Beschleunigung des Fahrzeugs führen. Mit den Informationen über das vorausfahrende Fahrzeug kann ferner ermittelt werden, ob der Abstand zu dem vorausfahrenden Fahrzeug erhöht oder reduziert werden muss, um den eingestellten Soll-Abstand zu dem vorausfahrenden Fahrzeug zu erreichen. Wenn äußere Einflüsse auf das Fahrzeug wirken, welche zu einer Beschleunigung des Fahrzeugs führen und gleichzeitig mittels der Informationen über das vorausfahrende Fahrzeug ermittelt wird, dass der Abstand zu dem vorausfahrenden Fahrzeug erhöht werden muss, kann auf diese Situation mit einem Einstellen bzw. Anpassen des Regelungsparameters der Regelung reagiert werden, damit das Regelungsverhalten nicht negativ von den äußeren Einflüssen auf das Fahrzeug beeinflusst wird. In Abhängigkeit des auf die äußeren Einflüsse abgestimmten Regelungsparameters kann somit die Längsdynamik des Fahrzeugs geregelt werden.

Der Betriebszustand der Dauerbremse ist beispielsweise das von der Dauerbremse verursachte Bremsmoment. Der Betriebszustand kann jedoch auch über die momentane Bremsleistung der Dauerbremse ermittelt werden. Ist die Dauerbremse als Motorbremse ausgeführt, insbesondere als Motorstaubremse mit Auspuffklappe oder als Motorstaubremse mit Auspuffklappe und Konstantdrossel, kann auch über die Klappenstellung der Betriebszustand der Dauerbremse ermittelt werden. Kommen Strömungsbremsen (hydrodynamische Retarder) oder Wirbelstrombremsen (elektromagnetische Retarder) als Dauerbremsen zum Einsatz, kann der Betriebszustand der Dauerbremse auch über die Wellen- oder Rotordrehzahl der Retarder ermittelt werden.
Eine erste bevorzugte Ausführungsform des erfindungsgemäßen Verfahrens beinhaltet die Schritte Ermitteln einer Grenzwertüber- und/oder -unterschreitung der ersten Zustandsgröße und/oder Ermitteln einer Grenzwertüber- und/oder - unterschreitung der zweiten Zustandsgröße und/oder Ermitteln einer Grenzwertüber- und/oder -unterschreitung der dritten Zustandsgröße. Das Einstellen des Regelungsparameters der Regelung erfolgt dann in Abhängigkeit der Grenzwertüber- und/oder -unterschreitungen der ersten, zweiten und/oder dritten Zustandsgröße. Insbesondere kann durch derartige Grenzwertüber- und/oder - unterschreitung festgestellt werden, ob das Fahrzeug einen Beschleunigungsgrenzwert überschreitet, der in Abhängigkeit der vorliegenden Grenzwertüber- und/oder -unterschreitungen des Antriebmoments des Motors und des Betriebszustandes der Dauerbremse zu erwarten wäre.

In einer zweiten bevorzugten Ausführungsform des erfindungsgemäßen Verfahrens erfolgt das Einstellen des Regelungsparameters der Regelung in Abhängigkeit einer Logik-Verknüpfung mindestens der Grenzwertüber- und/oder -unterschreitung der ersten, zweiten und/oder dritten Zustandsgröße. Diese auf der Booleschen Algebra basierende Operation erlaubt es, Zustände, welche einen ersten Zustandswert und einen zweiten Zustandswert annehmen können, miteinander zu vergleichen. Liegt beispielsweise eine Grenzwertüberschreitung vor, kann eine darauf bezogene Variable als 1, wahr oder true definiert werden. Liegt keine Grenzwertüberschreitung vor, kann die darauf bezogene Variable als 0, falsch oder false definiert werden. Durch logische Operatoren, wie AND-Verknüpfungen, OR-Verknüpfungen, NOT-Verknüpfungen, NOR-Verknüpfungen und/oder NAND-Verknüpfungen kann das Vorliegen von Grenzwertüberschreitungen mehrerer Zustandsgrößen miteinander verglichen werden und in Abhängigkeit davon der Regelungsparameter der Regelung eingestellt werden. Beispielsweise kann das Einstellen des Regelungsparameters der Regelung derart erfolgen, dass der Regelungsparameter solange einen konstanten Wert einnimmt, bis Grenzwertüberschreitungen der ersten, zweiten und dritten Zustandsgröße vorliegen. Liegen diese Grenzwertüberschreitungen gleichzeitig vor, wird der Regelungsparameter in definierter Weise verändert. Die Abfrage, ob eine gleichzeitige Grenzwertüberschreitung der ersten, zweiten und dritten Zustandsgröße vorliegt, kann durch eine logische UND-Verknüpfung von deren Zustandsvariablen abgefragt werden.

Eine weitere bevorzugte Ausführungsform des erfindungsgemäßen Verfahrens beinhaltet die Schritte Ermitteln einer von mindestens einer Radbremse abhängigen vierten Zustandsgröße und Ermitteln von Grenzwertüber- und/oder - unterschreitungen der vierten Zustandsgröße. Das Einstellen des Regelungsparameters der Regelung erfolgt in dieser Ausführungsform in Abhängigkeit einer Logik-Verknüpfung mindestens der Grenzwertüber- und/oder -unterschreitungen der ersten, zweiten, dritten und/oder vierten Zustandsgröße. Das Ermitteln der von mindestens einer Radbremse abhängigen vierten Zustandsgröße kann das Ermitteln eines Bremsdrucks, einer Bremskraft, der Fahrzeugbeschleunigung und/oder der Fahrzeuggeschwindigkeit beinhalten. Alternativ kann die vierte Zustandsgröße der Bremsdruck, die Bremskraft, die Fahrzeugbeschleunigung und/oder die Fahrzeuggeschwindigkeit selbst sein. Der Zustand der Radbremse gibt einen weiteren Anhaltspunkt dafür, ob Umgebungseinflüsse vorliegen, die das Fahrzeug unabhängig vom Antriebsmoment des Motors zusätzlich beschleunigen. Liegen derartige Umgebungseinflüsse vor, muss der Regelungsparameter der Regelung angepasst werden, damit der hohe Regelungskomfort aufrechterhalten und die gewünschten Abstände zu dem vorausfahrenden Fahrzeug gewährleistet werden können.

Das erfindungsgemäße Verfahren wird dadurch vorteilhaft weitergebildet, dass das Ermitteln von Informationen über das vorausfahrende Fahrzeug das Ermitteln der Geschwindigkeit und/oder der Beschleunigung des vorausfahrenden Fahrzeugs und/oder das Ermitteln des Ist-Abstandes zu dem vorausfahrenden Fahrzeug beinhaltet. Insbesondere werden zur Ermittlung von Informationen über das vorausfahrende Fahrzeug Radarsensoren oder Lidar-Systeme eingesetzt. Es kommen allerdings auch weitere auf der Laufzeitmessung beruhende Sensortypen für die Ermittlung von Informationen über das vorausfahrende Fahrzeug in Betracht. Auch der Einsatz von Photomischdetektoren (PMD-Sensoren) oder Ultraschall kommt für das Ermitteln von Informationen über das vorausfahrende Fahrzeug in Frage.

Eine weitere vorteilhafte Ausführungsform des erfindungsgemäßen Verfahrens beinhaltet den Schritt Ableiten von Informationen über den Neigungszustand des Fahrzeugs in Abhängigkeit der ersten, zweiten und dritten Zustandsgröße. Insbesondere können auch Informationen über den Neigungszustand des Fahrzeugs in Abhängigkeit der ersten, zweiten, dritten und vierten Zustandsgröße abgeleitet werden. Dabei kann auf Grundlage der Zustandsgrößen entweder darauf geschlossen werden, dass ein bestimmter Neigungsgrenzwert der Fahrbahn oder des Fahrzeugs überschritten wurde oder mittels einer Berechnungsroutine der exakte momentane Neigungswert der Fahrbahn und/oder des Fahrzeugs ermittelt werden.

In einer weiteren Ausführungsform des erfindungsgemäßen Verfahrens beinhaltet das Regeln der Längsdynamik des Fahrzeugs in Abhängigkeit von dem Regelungsparameter das Beschleunigen und/oder Abbremsen des Fahrzeugs. Dies bedeutet, dass die Regelung auf das Bremssystem des Fahrzeugs sowie auf das Motormanagement zugreifen kann, um situationsabhängig ein zusätzliches Brems- und/oder Antriebsmoment zu erzeugen. Vorzugsweise beinhaltet das Ermitteln der von der Fahrzeugbeschleunigung abhängigen ersten Zustandsgröße das Ermitteln der Fahrzeugbeschleunigung, alternativ ist die erste Zustandsgröße die Fahrzeugbeschleunigung. Vorzugsweise beinhaltet das Ermitteln der von dem Antriebsmoment des Motors abhängigen zweiten Zustandsgröße das Ermitteln des Antriebsmoments des Motors, alternativ ist die zweite Zustandsgröße das Antriebsmoment des Motors. Vorzugsweise beinhaltet das Ermitteln der von dem Betriebszustand mindestens einer Dauerbremse abhängigen dritten Zustandsgröße das Ermitteln einer oder mehrerer der oben genannten bei Dauerbremsen ermittelbaren Größen, alternativ ist die dritte Zustandsgröße eine der oben genannten bei Dauerbremsen ermittelbaren Größen.

In einer weiteren bevorzugten Ausführungsform des erfindungsgemäßen Verfahrens beinhaltet das Ermitteln der von dem Betriebszustand mindestens einer Dauerbremse abhängigen dritten Zustandsgröße das Ermitteln der Auslastung der mindestens einen Dauerbremse. Die Auslastung kann beispielsweise als prozentualer Anteil ermittelt werden, wobei eine deaktivierte oder inaktive Dauerbremse zu 0 % und eine maximalbeanspruchte Dauerbremse zu 100 % ausgelastet ist.

In einer weiteren vorteilhaften Ausführungsform beinhaltet das erfindungsgemäße Verfahren die Schritte Definieren eines Soll-Abstandes zu dem vorausfahrenden Fahrzeug, Ermitteln des Ist-Abstandes zu dem vorausfahrenden Fahrzeug und Vergleichen des ermittelten Ist-Abstandes zu dem vorausfahrenden Fahrzeug mit dem definierten Soll-Abstand zu dem vorausfahrenden Fahrzeug.

Besonders vorteilhaft wird das erfindungsgemäße Verfahren dadurch weitergebildet, dass sich der Regelungsparameter vergrößert oder verkleinert, wenn Grenzwertüber- und/oder -unterschreitungen der ersten, zweiten und dritten Zustandsgröße vorliegen und der Soll-Abstand zu dem vorausfahrenden Fahrzeug größer als der Ist-Abstand zu dem vorausfahrenden Fahrzeug ist. Die Vergrößerung oder Verkleinerung des Regelungsparameters ist unabhängig von der Höhe der Grenzwertüber- und/oder -unterschreitungen, sondern vergrößert oder verkleinert sich so lange die Grenzwertüber- und/oder -unterschreitungen der ersten, zweiten und dritten Zustandsgröße vorliegen.

Das erfindungsgemäße Verfahren wird dadurch in vorteilhafter Weise weitergebildet, dass der Regelungsparameter einen Maximalwert nicht überschreitet und einen Minimalwert nicht unterschreitet. Vorzugsweise bleibt der Regelungsparameter beim Erreichen des Maximalwertes oder des Minimalwertes konstant, wenn Grenzwertüber- und/oder -unterschreitungen der ersten, zweiten und dritten Zustandsgröße vorliegen und der Soll-Abstand zu dem vorausfahrenden Fahrzeug größer als der Ist-Abstand zu dem vorausfahrenden Fahrzeug ist. Durch die Beschränkung des Regelungsparameters auf einen definierten Wertebereich wird beispielsweise verhindert, dass die Regelung während einer andauernden Bergabfahrt extrem verhärtet, da der die Regelung beeinflussende Regelungsparameter auf einen extrem großen Wert angewachsen ist.

In einer besonders bevorzugten Ausführungsform des erfindungsgemäßen Verfahrens vergrößert und/oder verkleinert sich der Regelungsparameter linear, nicht linear und/oder nach einer definierten Funktion, wenn Grenzwertüber- und/oder -unterschreitungen der ersten, zweiten und dritten Zustandsgröße vorliegen und der Soll-Abstand zu dem vorausfahrenden Fahrzeug größer ist als der Ist-Abstand zu dem vorausfahrenden Fahrzeug. Die Ermittlung des Reglungsparameters erfolgt also nicht in Abhängigkeit der Höhe der Grenzwertüber- und/oder -unterschreitungen der ersten, zweiten oder dritten Zustandsgröße. Vielmehr wächst der Regelungsparameter gemäß einer der oben bezeichneten Funktionen mit andauernden Grenzwertüber- und/oder -unterschreitungen der ersten, zweiten und dritten Zustandsgröße an oder fällt mit diesen ab, wenn der Soll-Abstand zu dem vorausfahrenden Fahrzeug größer ist als der Ist-Abstand zu dem vorausfahrenden Fahrzeug.

In einer weiteren Ausführungsform des erfindungsgemäßen Verfahrens ist der Regelungsparameter der Regelung ein Verstärkungsfaktor. Das erfindungsgemäße Verfahren beinhaltet zusätzlich die Schritte Ermitteln einer Geschwindigkeitsdifferenz zu dem vorausfahrenden Fahrzeug und Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor. Die Soll-Beschleunigung ist dabei von einer verstärkten Geschwindigkeitsdifferenz zu dem vorausfahrenden Fahrzeug abhängig, wobei die Verstärkung der Geschwindigkeitsdifferenz zu dem vorausfahrenden Fahrzeug von dem Verstärkungsfaktor abhängt und/oder die Soll-Beschleunigung eine Funktion der ermittelten Geschwindigkeitsdifferenz und des Verstärkungsfaktors ist. So kann es beispielsweise vorkommen, dass der Verstärkungsfaktor während der Fahrt in einer Ebene konstant ist und sich während einer Bergabfahrt und/oder während einer Neigungsfahrt verändert, vorzugsweise sich mit andauernder Bergabfahrt und/oder Neigungsfahrt bis zu einem Maximalwert vergrößert. Sollte eine der Grenzwertüber- und/oder -unterschreitungen nicht mehr vorliegen, kann der Verstärkungsfaktor entweder direkt auf den konstanten Wert zurückgesetzt werden oder stetig oder gemäß einer Funktion auf diesen abgesenkt werden.

Eine weitere Ausführungsform des erfindungsgemäßen Verfahrens umfasst den Schritt Ermittlung der momentanen Fahrzeugmasse. Besonders bevorzugt ist das Einstellen des mindestens einen Regelungsparameters der Regelung auch abhängig von der Fahrzeugmasse. Insbesondere kann die Fahrzeugmasse einen Einfluss auf die definierten Grenzwerte haben, deren Über- und/oder Unterschreitungen mittels des Verfahrens erfasst werden können. Somit kann gewährleistet werden, dass das Verfahren zur Regelung verschiedener Fahrzeugtypen verwendet werden kann. Beispielweise kann die Regelung durch die Berücksichtigung der Fahrzeugmasse auf den aktuellen Beladungszustand reagieren.

Die der Erfindung zugrunde liegende Aufgabe wird in einem zweiten Aspekt mit einer Vorrichtung der eingangs genannten Art gelöst, wobei die Auswertungs-, Einstell- und Regeleinheit ausgebildet ist, um abhängig von einer aus der Fahrzeuggeschwindigkeit ermittelten Fahrzeugbeschleunigung, dem Antriebsmoment des Motors, dem Betriebszustand der mindestens einen Dauerbremse und den Informationen über das vorausfahrende Fahrzeug den mindestens einen Regelungsparameter einzustellen. Als erste Sensiereinrichtung zum Ermitteln der Fahrzeuggeschwindigkeit kommt neben einem Geschwindigkeitssensor auch ein Beschleunigungssenor in Frage, wie beispielsweise ein piezoelektrischer, piezoresistiver, kapazitiver oder magnetoresistiver Beschleunigungssensor. Die zweite Sensiereinrichtung kann ein auf Dehnungsmessstreifen basierender Momentenaufnehmer sein. Ferner kann die zweite Sensiereinrichtung auch ausgeführt sein um nach dem piezoelektrischen, dem magnetoelastischen oder dem optischen Prinzip zu funktionieren. Die dritte Sensiereinrichtung zum Ermitteln des Betriebszustandes mindestens einer Dauerbremse kann beispielsweise ein Beschleunigungs- oder Geschwindigkeitssensor, ein Bremsdrucksensor, ein Neigungssensor oder ein Drehzahlsensor sein. Als vierte Sensiereinrichtung finden besonders bevorzugt Radar- und Lidar-Systeme Anwendung.

In einer weiteren bevorzugten Ausführungsform der erfindungsgemäßen Vorrichtung umfasst die Auswertungs-, Einstell- und Regeleinheit eine Logik-Einheit, welche mit den Sensiereinrichtungen verbunden ist und ausgebildet ist, um erfasste Grenzwertüber- und/oder -unterschreitungen der Fahrzeugbeschleunigung, des Antriebsmoments des Motors, des Betriebszustandes der mindestens einen Dauerbremse und der Differenz zwischen dem Soll-Abstand zu dem vorausfahrenden Fahrzeug und dem Ist-Abstand zu dem vorausfahrenden Fahrzeug logisch miteinander zu verknüpfen und daraus den Regelungsparameter einzustellen. Diese Logik-Einheit ist vorzugsweise als elektronisches Rechenwerk ausgeführt.

Die erfindungsgemäße Vorrichtung wird durch eine fünfte Sensiereinrichtung zum Ermitteln des Zustands mindestens einer Radbremse vorteilhaft weitergebildet, wobei die Auswertungs-, Einstell- und Regeleinheit auch den Zustand der mindestens einen Radbremse auswertet, die Logik-Einheit erfasste Grenzwertüber- und/oder -unterschreitungen des Zustands der mindestens einen Radbremse logisch mit den erfassten Grenzwertüber- und/oder -unterschreitungen der Fahrzeugbeschleunigung, des Antriebsmoments des Motors, des Betriebszustandes der mindestens einen Dauerbremse und der Differenz zwischen dem Soll-Abstand zu dem vorausfahrenden und dem Ist-Abstand zu dem vorausfahrenden Fahrzeug verknüpft und daraus den Regelungsparameter einstellt. Die fünfte Sensiereinrichtung kann beispielsweise ein Geschwindigkeits- oder Beschleunigungssensor, ein Bremsdrucksensor oder ein Momentenaufnehmer sein.

Die der Erfindung zugrunde liegende Aufgabe wird ferner durch ein Kraftfahrzeug mit einer Vorrichtung zur Regelung einer Längsdynamik gemäß einem der Ansprüche 12 bis 14 und/oder wobei die Vorrichtung zum Durchführen eines Verfahrens nach einem der Ansprüche 1 bis 11 eingerichtet, ausgelegt und/oder konstruiert ist, gelöst.

Die in der vorliegenden Beschreibung, in den Figuren sowie in den Ansprüchen offenbarten Merkmale der Erfindung können sowohl einzeln als auch in beliebiger Kombination für die Verwirklichung der Erfindung in ihren Ausführungsformen wesentlich sein.

Die Erfindung wird nachfolgend anhand von Figuren näher beschrieben, ohne dass diese den Schutzbereich der Schutzansprüche beschränken sollen. Es stellen dar:
- Fig. 1: ein längsdynamisch geregeltes Fahrzeug während einer Folgefahrt hinter einem vorausfahrenden Fahrzeug in der Ebene;
- Fig. 2: ein längsdynamisch geregeltes Fahrzeug während einer Folgefahrt hinter einem vorausfahrenden Fahrzeug auf einer Neigungsstrecke;
- Fig. 3: eine Ausführungsform der erfindungsgemäßen Vorrichtung in einer schematischen Darstellung;
- Fig. 4: ein Ablaufdiagramm einer Ausführungsform des erfindungsgemäßen Verfahrens zur automatischen Regelung einer Längsdynamik eines Kraftfahrzeugs; und
- Fig. 5: eine schematische Darstellung der Zustandsgrößen- und Regelparameterveränderungen aufgetragen über die Zeit.

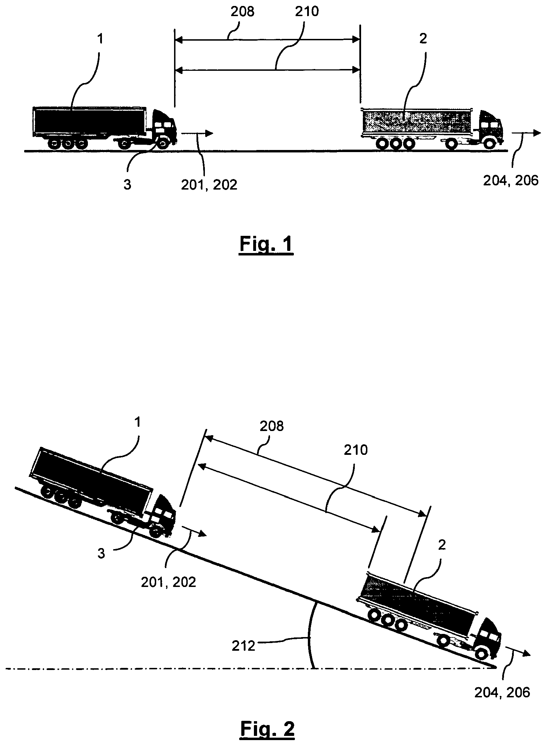

Fig. 1 zeigt eine Folgefahrt eines längsdynamisch geregelten Kraftfahrzeugs 1 hinter einem vorausfahrenden Fahrzeug 2 in der Ebene. Das Kraftfahrzeug 1 bewegt sich mit einer Geschwindigkeit 201 sowie einer Beschleunigung 202 hinter dem vorausfahrenden Fahrzeug 2, welches sich mit einer Geschwindigkeit 204 und einer Beschleunigung 206 bewegt. Das Kraftfahrzeug 1 weist eine Vorrichtung 3 zur Regelung einer Längsdynamik des Fahrzeugs 1 auf, welche in Abhängigkeit der ermittelten Fahrzeugbeschleunigung, des Antriebsmomentes des Motors, des Betriebszustandes der Dauerbremse und den Informationen über das vorausfahrende Fahrzeug 2 das Fahrzeug 1 beschleunigen und abbremsen kann. Während der dargestellten Fahrt in der Ebene wirken keine Umgebungseinflüsse auf das Fahrzeug 1, welche eine Anpassung der auf eine Fahrt in der Ebene abgestimmten Regelung notwendig machen würden. Die Regelung ist dazu eingerichtet, während der Fahrt in der Ebene einen hohen Regelungskomfort zu gewährleisten und gleichzeitig den gewünschten Soll-Abstand 208 zu dem vorausfahrenden Fahrzeug 2 mit einer zufriedenstellenenden Toleranz einzuhalten, sodass der Ist-Abstand 210 zu dem vorausfahrenden Fahrzeug 2 im Wesentlichen dem eingestellten Soll-Abstand 208 zu dem vorausfahrenden Fahrzeug 2 entspricht.

Durch die in Fig. 2 dargestellte Neigungsfahrt des Fahrzeugs 1 auf einer um den Winkel 212 geneigten Fahrbahn, kommt es zu einer zusätzlichen Beschleunigung des Fahrzeugs 1, welche nicht durch das Antriebsmoment des Motors hervorgerufen wird. Die Beschleunigung 202 sowie die Geschwindigkeit 201 des Fahrzeugs 1 werden folglich erhöht. Bleibt die Geschwindigkeit 204 und/oder die Beschleunigung 206 des vorausfahrenden Fahrzeugs 2 konstant, wird der eingestellte Soll-Abstand 208 zu dem vorausfahrenden Fahrzeug 2 nicht mehr eingehalten. Folglich ist der Ist-Abstand 210 zu dem vorausfahrenden Fahrzeug 2 kleiner als der eingestellte Soll-Abstand 208 zu dem vorausfahrenden Fahrzeug 2. Wird gleichzeitig eine Grenzwertüberschreitung der Fahrzeugbeschleunigung 202 sowie des Betriebszustands mindestens einer Dauerbremse festgestellt, besteht die Notwendigkeit die Regelung an diese Umgebungseinflüsse anzupassen. Dies geschieht durch die Einstellung eines Regelungsparameters in Abhängigkeit der Fahrzeugbeschleunigung 202, des Antriebsmomentes des Motors, des Betriebszustandes der mindestens einen Dauerbremse und der Informationen über das vorausfahrende Fahrzeug 2.

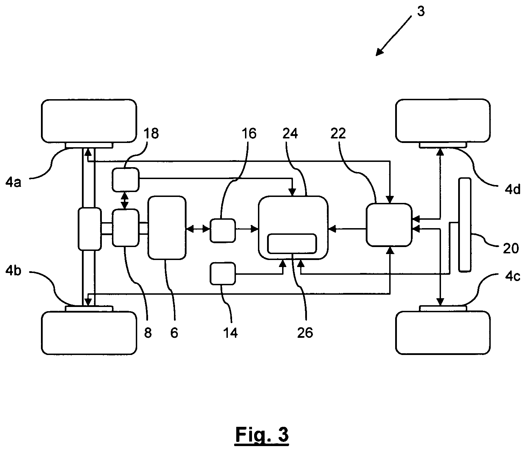

Gemäß Fig. 3 umfasst die Vorrichtung zur Regelung der Längsdynamik des Fahrzeugs 3 eine erste Sensiereinrichtung 14 zum Ermitteln der Fahrzeuggeschwindigkeit, eine zweite Sensiereinrichtung 16 zum Ermitteln des Antriebsmoments des Motors 6, eine dritte Sensiereinrichtung 18 zum Ermitteln des Betriebszustandes einer Dauerbremse 8, eine vierte Sensiereinrichtung 20 zum Ermitteln von Informationen über ein vorausfahrende Fahrzeug, eine fünfte Sensiereinrichtung 22 zum Ermitteln des Zustandes der vier Radbremsen 4a, 4b, 4c, 4d und eine Auswertungs-, Einstell- und Regeleinheit 24 zum Auswerten der mittels der Sensiereinrichtungen 14, 16, 18, 20, 22 ermittelten Daten, Einstellen mindestens eines Regelungsparameters und Regeln der Längsdynamik des Fahrzeugs in Abhängigkeit des eingestellten Regelungsparameters.

Die Auswertungs-, Einstell- und Regeleinheit 24 ist ausgebildet, um abhängig von einer aus der Fahrzeuggeschwindigkeit ermittelten Fahrzeugbeschleunigung, dem Antriebsmoment des Motors 6, dem Betriebszustand der Dauerbremse 8, dem Zustand der vier Radbremsen 4a, 4b, 4c, 4d und den Informationen über das vorausfahrende Fahrzeug, den Regelungsparameter einzustellen. Ferner weist die Auswertungs-, Einstell- und Regeleinheit 24 eine Logik-Einheit 26 auf, welche Grenzwertüberschreitungen der Fahrzeugbeschleunigung, des Antriebsmoments des Motors 6, des Betriebszustands der Dauerbremse 8, des Zustandes der vier Radbremsen 4a, 4b, 4c, 4d und der Differenz zwischen dem Soll-Abstand zu dem vorausfahrenden Fahrzeug und dem Ist-Abstand zu dem vorausfahrenden Fahrzeug logisch verknüpft und daraus den Regelungsparameter einstellt.

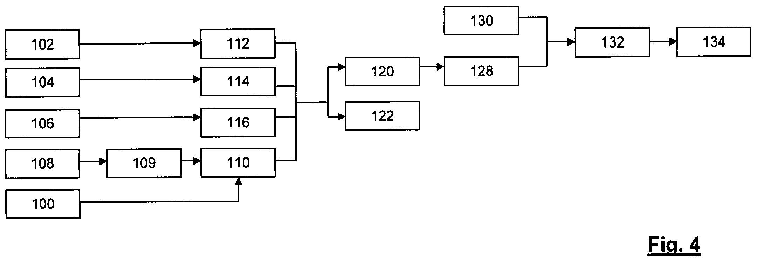

Fig. 4 zeigt ein Ablaufdiagramm für das Verfahren zur automatischen Regelung einer Längsdynamik eines Kraftfahrzeugs. Das Verfahren umfasst die Schritte Ermitteln einer von der Fahrzeugbeschleunigung abhängigen ersten Zustandsgröße 102, Ermitteln einer von dem Antriebsmoment des Motors abhängigen zweiten Zustandsgröße 104, Ermitteln einer von dem Betriebszustand mindestens einer Dauerbremse abhängigen dritten Zustandsgröße 106 und Ermitteln von Informationen über ein vorausfahrendes Fahrzeug 108. Auf Grundlage der ermittelten Informationen über das vorausfahrende Fahrzeug wird der Ist-Abstand zu dem vorausfahrenden Fahrzeug ermittelt (Schritt: Ermitteln des Ist-Abstandes zu dem vorausfahrenden Fahrzeug 109). Ein durch den Schritt Definieren eines Soll-Abstandes zum vorausfahrenden Fahrzeug 100 definierter Soll-Abstand zum vorausfahrenden Fahrzeug wird im Schritt Vergleichen des ermittelten Ist-Abstandes zu dem vorausfahrenden Fahrzeug mit dem definierten Soll-Abstand zu dem vorausfahrenden Fahrzeug 110 vergleichen. Ferner umfasst das Verfahren die Schritte Ermitteln einer Grenzwertüberschreitung der ersten Zustandsgröße 112, Ermitteln einer Grenzwertüberschreitung der zweiten Zustandsgröße 114 und Ermitteln einer Grenzwertüberschreitung der dritten Zustandsgröße 116.

Auf Grundlage der Grenzwertüberschreitungen der ersten, zweiten und dritten Zustandsgröße sowie dem Vergleich von dem ermittelten Ist-Abstand zu dem vorausfahrenden Fahrzeug zu dem definierten Soll-Abstand zu dem vorausfahrenden Fahrzeug kann mittels einer Logik-Verknüpfung 120 das Einstellen des mindestens einen Regelungsparameters der Regelung 128 erfolgen. Außerdem ist das Ableiten von Informationen über den Neigungszustand des Fahrzeugs in Abhängigkeit der ersten, zweiten und dritten Zustandsgröße 122 möglich. Der Regelungsparameter in dem dargestellten Verfahren ist ein Verstärkungsfaktor. Nach dem Schritt Ermitteln einer Geschwindigkeitsdifferenz zu dem vorausfahrenden Fahrzeug 130 kann der Schritt Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor 132 erfolgen. Nachdem die Soll-Beschleunigung des Fahrzeugs ermittelt ist, kann der Schritt Regeln der Längsdynamik des Fahrzeugs in Abhängigkeit von dem Regelungsparameter (Verstärkungsfaktor) ausgeführt werden. Somit kann auf Grundlage des beschriebenen Verfahrens die Regelung der Längsdynamik des Kraftfahrzeugs an die Umgebungseinflüsse, die auf das Kraftfahrzeug wirken, angepasst werden, sodass beispielsweise während einer Neigungsfahrt ein ähnlicher Regelungskomfort bzw. Fahrkomfort wie während einer Fahrt in der Ebene gewährleistet werden kann und außerdem der definierte Soll-Abstand zu dem vorausfahrenden Fahrzeug in zufriedenstellender Weise eingehalten werden kann.

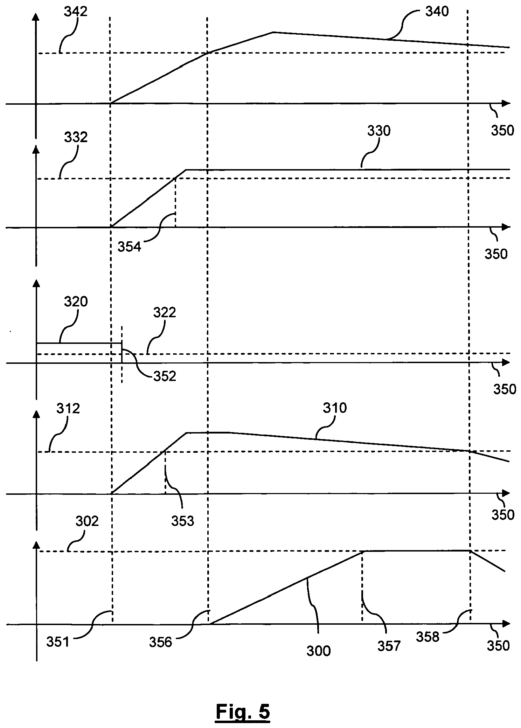

Fig. 5 zeigt die Veränderungen des Regelungsparameters 300, der von der Fahrzeugbeschleunigung abhängigen ersten Zustandsgröße 310, der von dem Antriebsmoment des Motors abhängigen zweiten Zustandsgröße 320, der von dem Betriebszustand der Dauerbremse abhängigen dritten Zustandsgröße 330 und die Differenz 340 zwischen dem Soll-Abstand zu dem vorausfahrenden Fahrzeug und dem Ist-Abstand zu dem vorausfahrenden Fahrzeug, aufgetragen über die Zeit 350. In der dargestellten Fahrsituation befährt das zu regelnde Fahrzeug zum Zeitpunkt 351 eine geneigte Fahrbahn. Zu dem Zeitpunkt 352 wird das Antriebsmoment des Motors auf null abgesenkt, sodass auch die zweite Zustandsgröße 320 auf null abfällt. Durch das Abfallen der zweiten Zustandsgröße wird ein Grenzwert der zweiten Zustandsgröße 322 unterschritten. Aufgrund der geneigten Fahrbahn erfährt das Fahrzeug eine zusätzliche Beschleunigung, welche nicht von dem Antriebsmoment des Motos abhängig ist. Trotz des nicht vorhandenen Motormomentes nimmt die Beschleunigung bis zu einem Grenzwert zu, sodass auch die erste Zustandsgröße 310 bis zu einem Maximalwert zunimmt. Während dem Ansteigen der ersten Zustandsgröße 310 wird zu dem Zeitpunkt 353 ein Grenzwert der ersten Zustandsgröße 312 überschritten. Aufgrund der zunehmenden Beschleunigung ist auch die Dauerbremse des Fahrzeugs zugeschaltet worden. Die dritte Zustandsgröße 330 ist in dem gezeigten Ausführungsbeispiel die prozentuale Auslastung der Dauerbremse. Zu dem Zeitpunkt 354 überschreitet die dritte Zustandsgröße 330 einen Grenzwert der dritten Zustandsgröße 332, welcher beispielsweise bei 90% der Maximalauslastung der Dauerbremse liegen kann. Seit dem Befahren der Neigungsstrecke zu dem Zeitpunkt 351 vergrößert sich die Differenz 340 zwischen dem Soll-Abstand zu dem vorausfahrenden Fahrzeug und dem Ist-Abstand zu dem vorausfahrenden Fahrzeug. Zu dem Zeitpunkt 356 wird ein Grenzwert 342 der Differenz 340 zwischen dem Soll-Abstand zu dem vorausfahrenden Fahrzeug und dem Ist-Abstand zu dem vorausfahrenden Fahrzeug überschritten. Zu dem Zeitpunkt 356 liegen folglich gleichzeitig Grenzwertüberschreitungen der ersten Zustandsgröße 310, der dritten Zustandsgröße 330 und der Differenz 340 zwischen dem Soll-Abstand zu dem vorausfahrenden Fahrzeug und dem Ist-Abstand zu dem vorausfahrenden Fahrzeug sowie eine Grenzwertunterschreitung der zweiten Zustandsgröße vor. Aufgrund des Vorliegens dieser Grenzwertüberschreitungen und der Grenzwertunterschreitung wächst der Regelungsparameter 300 ausgehend von dem Zeitpunkt 356 stetig an bzw. vergrößert sich, bis der Regelungsparameter 300 zum Zeitpunkt 357 einen Maximalwert 302 erreicht. Der Regelungsparameter 300 bleibt nach einmaliger Erreichung des Maximalwertes 302 konstant, bis eine der beschriebenen Grenzwertüberschreitungen oder die beschriebene Grenzwertunterschreitung nicht mehr vorliegt. In der dargestellten Fahrsituation fällt zum Zeitpunkt 358 die erste Zustandsgröße 310 unter den Grenzwert der ersten Zustandsgröße 312 ab. Da eine der Voraussetzungen, welche zur Vergrößerung oder zu einem konstanten Halten des Regelungsparameters 300 erfüllt sein müssen, nicht mehr vorliegt, verringert sich der Regelungsparameter 300 ab dem Zeitpunkt 358.

Bei der Darstellung in Fig. 5 handelt es sich um eine schematische Darstellung zur Erläuterung des erfindungsgemäßen Regelungsverfahrens. Die dargestellten Verläufe der Zustandsgrößen 310, 320, 330 und der Verlauf der Differenz 340 zwischen dem Soll-Abstand zu dem vorausfahrenden Fahrzeug und dem Ist-Abstand zu dem vorausfahrenden Fahrzeug sind stark vereinfacht und berücksichtigen nicht die Gesamtheit aller Wechselwirkungen dieser Größen untereinander.

### Bezugszeichenliste (Bestandteil der Beschreibung)

- 1: Kraftfahrzeug
- 2: vorausfahrendes Fahrzeug
- 3: Vorrichtung zur Regelung der Längsdynamik des Fahrzeugs
- 4a, 4b, 4c, 4d: Radbremsen
- 6: Motor
- 8: Dauerbremse
- 14: erste Sensiereinrichtung
- 16: zweite Sensiereinrichtung
- 18: dritte Sensiereinrichtung
- 20: vierte Sensiereinrichtung
- 22: fünfte Sensiereinrichtung
- 24: Auswertungs-, Einstell- und Regeleinheit
- 26: Logik-Einheit
- 100: Definieren eines Soll-Abstandes zum vorausfahrenden Fahrzeug
- 102: Ermitteln einer von der Fahrzeugbeschleunigung abhängigen ersten Zustandsgröße
- 104: Ermitteln einer von dem Antriebsmoment des Motors abhängigen zweiten Zustandsgröße
- 106: Ermitteln einer von dem Betriebszustand mindestens einer Dauerbremse abhängigen dritten Zustandsgröße
- 108: Ermitteln von Informationen über ein vorausfahrendes Fahrzeug
- 109: Ermitteln des Ist-Abstandes zu dem vorausfahrenden Fahrzeug
- 110: Vergleichen des ermittelten Ist-Abstandes zu dem vorausfahrenden Fahrzeug mit dem definierten Soll-Abstand zu dem vorausfahrenden Fahrzeug
- 112: Ermitteln einer Grenzwertüber- und/oder -unterschreitung
- der ersten: Zustandsgröße
- 114: Ermitteln einer Grenzwertüber- und/oder -unterschreitung
- der zweiten: Zustandsgröße
- 116: Ermitteln einer Grenzwertüber- und/oder -unterschreitung
- der dritten: Zustandsgröße
- 120: Einstellen des mindestens einen Regelungsparameters der Regelung in Abhängigkeit einer Logik-Verknüpfung
- 122: Ableiten von Informationen über den Neigungszustand des Fahrzeugs in Abhängigkeit der ersten, zweiten und dritten Zustandsgröße
- 128: Einstellen mindestens eines Regelungsparameters der Regelung
- 130: Ermitteln einer Geschwindigkeitsdifferenz zu dem vorausfahrenden Fahrzeug
- 132: Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor Fahrzeug und dem eingestellten Verstärkungsfaktor
- 134: Regeln der Längsdynamik des Fahrzeugs in Abhängigkeit von dem mindestens einen Regelungsparameter
- 201: Geschwindigkeit des Fahrzeugs
- 202: Beschleunigung des Fahrzeugs
- 204: Geschwindigkeit des vorausfahrenden Fahrzeugs
- 206: Beschleunigung des vorausfahrenden Fahrzeugs
- 208: Soll-Abstand zu dem vorausfahrenden Fahrzeug
- 210: Ist-Abstand zu dem vorausfahrenden Fahrzeug
- 212: Neigungswinkel der Fahrbahn
- 300: Regelungsparameter
- 302: Maximalwert des Regelungsparameters
- 310: erste Zustandsgröße
- 312: Grenzwert der ersten Zustandsgröße
- 320: zweite Zustandsgröße
- 322: Grenzwert der zweiten Zustandsgröße
- 330: dritte Zustandsgröße
- 332: Grenzwert der dritten Zustandsgröße
- 340: Differenz zwischen dem Soll-Abstand zu dem vorausfahrenden Fahrzeug und dem Ist-Abstand zu dem vorausfahrenden Fahrzeug
- 342: Grenzwert der Differenz zwischen dem Soll-Abstand zu dem vorausfahrenden Fahrzeug und dem Ist-Abstand zu dem vorausfahrenden Fahrzeug
- 350: Zeit
- 351 - 358: Zeitpunkte

## Patentansprüche

1. Verfahren zur automatischen Regelung einer Längsdynamik eines Kraftfahrzeugs, insbesondere eines Nutzfahrzeugs, mit den Schritten:
- Ermitteln einer von der Fahrzeugbeschleunigung abhängigen ersten Zustandsgröße (102);
- Ermitteln einer von dem Antriebsmoment des Motors abhängigen zweiten Zustandsgröße (104);
- Ermitteln einer von dem Betriebszustand mindestens einer Dauerbremse abhängigen dritten Zustandsgröße (106);
- Ermitteln von Informationen über ein vorausfahrendes Fahrzeug (108);
- Einstellen mindestens eines Regelungsparameters der Regelung (128); und
- Regeln der Längsdynamik des Fahrzeugs in Abhängigkeit von dem mindestens einen Regelungsparameter (134);
und wobei das Einstellen des mindestens einen Regelungsparameters der Regelung (128) in Abhängigkeit der ersten, zweiten und dritten Zustandsgröße und der ermittelten Informationen über das vorausfahrende Fahrzeug erfolgt.

2. Verfahren nach Anspruch 1,
**gekennzeichnet durch** die Schritte:
- Ermitteln einer Grenzwertüber- und/oder -unterschreitung der ersten Zustandsgröße (112); und/oder
- Ermitteln einer Grenzwertüber- und/oder -unterschreitung der zweiten Zustandsgröße (114); und/oder
- Ermitteln einer Grenzwertüber- und/oder -unterschreitung der dritten Zustandsgröße (116);
und wobei das Einstellen des mindestens einen Regelungsparameters der Regelung (128) in Abhängigkeit der Grenzwertüber- und/oder -unterschreitungen der ersten, zweiten und/oder dritten Zustandsgröße erfolgt.

3. Verfahren nach Anspruch 2,
**dadurch gekennzeichnet, dass** das Einstellen des mindestens einen Regelungsparameters der Regelung (128) in Abhängigkeit einer Logik-Verknüpfung (120) mindestens der Grenzwertüber- und/oder -unterschreitungen der ersten, zweiten und/oder dritten Zustandsgröße erfolgt.

4. Verfahren nach Anspruch 3,
**gekennzeichnet durch** die Schritte:
- Ermitteln einer von mindestens einer Radbremse abhängigen vierten Zustandsgröße; und
- Ermitteln von Grenzwertüber- und/oder -unterschreitungen der vierten Zustandsgröße;
wobei das Einstellen des mindestens einen Regelungsparameters der Regelung (128) in Abhängigkeit einer Logik-Verknüpfung (120) mindestens der Grenzwertüber- und/oder -unterschreitungen der ersten, zweiten, dritten und/oder vierten Zustandsgrößen erfolgt.

5. Verfahren nach einem der vorstehenden Ansprüche,
**dadurch gekennzeichnet, dass** das Ermitteln von Informationen über das vorausfahrende Fahrzeug (108) das Ermitteln der Geschwindigkeit und/oder der Beschleunigung des vorausfahrenden Fahrzeugs und/oder das Ermitteln des Ist-Abstandes zu dem vorausfahrenden Fahrzeug beinhaltet.

6. Verfahren nach einem der vorstehenden Ansprüche,
**gekennzeichnet durch** den Schritt:
- Ableiten von Informationen über den Neigungszustand des Fahrzeugs in Abhängigkeit der ersten, zweiten und dritten Zustandsgröße (122).

7. Verfahren nach einem der vorstehenden Ansprüche,
**dadurch gekennzeichnet, dass** das Ermitteln der von dem Betriebszustand mindestens einer Dauerbremse abhängigen dritten Zustandsgröße (106) das Ermitteln der Auslastung der mindestens einen Dauerbremse beinhaltet.

8. Verfahren nach einem der vorstehenden Ansprüche,
**dadurch gekennzeichnet, dass** sich der Regelungsparameter vergrößert oder verkleinert, wenn Grenzwertüber- und/oder -unterschreitungen der ersten, zweiten und dritten Zustandsgröße vorliegen und ein Soll-Abstand zu dem vorausfahrenden Fahrzeug größer als ein Ist-Abstand zu dem vorausfahrenden Fahrzeug ist.

9. Verfahren nach Anspruch 8,
**dadurch gekennzeichnet, dass** der Regelungsparameter einen Maximalwert nicht überschreitet und einen Minimalwert nicht unterschreitet und vorzugsweise bei Erreichen des Maximalwertes oder des Minimalwertes konstant bleibt, wenn Grenzwertüber- und/oder -unterschreitungen der ersten, zweiten und dritten Zustandsgröße vorliegen und der Soll-Abstand zu dem vorausfahrenden Fahrzeug größer als der Ist-Abstand zu dem vorausfahrenden Fahrzeug ist.

10. Verfahren nach Anspruch 8 oder Anspruch 9,
**dadurch gekennzeichnet, dass** sich der Regelungsparameter linear, nicht-linear und/oder nach einer definierten Funktion vergrößert und/oder verkleinert, wenn Grenzwertüber- und/oder -unterschreitungen der ersten, zweiten und dritten Zustandsgröße vorliegen und der Soll-Abstand zu dem vorausfahrenden Fahrzeug größer als der Ist-Abstand zu dem vorausfahrenden Fahrzeug ist.

11. Verfahren nach einem der Ansprüche 8 bis 10,
**dadurch gekennzeichnet, dass** der Regelungsparameter der Regelung ein Verstärkungsfaktor ist und durch die Schritte:
- Ermitteln einer Geschwindigkeitsdifferenz zu dem vorausfahrenden Fahrzeug (130); und
- Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor (132);
wobei die Soll-Beschleunigung von einer verstärkten Geschwindigkeitsdifferenz zu dem vorausfahrenden Fahrzeug abhängt und die Verstärkung der Geschwindigkeitsdifferenz zu dem vorausfahrenden Fahrzeug von dem Verstärkungsfaktor abhängt und/oder die Soll-Beschleunigung eine Funktion der ermittelten Geschwindigkeitsdifferenz und des Verstärkungsfaktors ist.

12. Vorrichtung (3) zur Regelung einer Längsdynamik eines Kraftfahrzeugs (1), insbesondere eines Nutzfahrzeugs, mit
einer ersten Sensiereinrichtung (14) zum Ermitteln der Fahrzeuggeschwindigkeit,
einer zweiten Sensiereinrichtung (16) zum Ermitteln des Antriebsmoments des Motors (6),
einer dritten Sensiereinrichtung (18) zum Ermitteln des Betriebszustandes mindestens einer Dauerbremse (8),
einer vierten Sensiereinrichtung (20) zum Ermitteln von Informationen über ein vorausfahrendes Fahrzeug (2), und
einer Auswertungs-, Einstell- und Regeleinheit (24) zum Auswerten der Fahrzeuggeschwindigkeit, des Antriebsmoments des Motors (6), des Betriebszustandes der mindestens einen Dauerbremse (8) und der Informationen über das vorausfahrende Fahrzeug (2), Einstellen mindestens eines Regelungsparameters und Regeln der Längsdynamik des Fahrzeugs (1) in Abhängigkeit des mindestens einen Regelungsparameters,
und wobei die Auswertungs-, Einstell- und Regeleinheit (24) ausgebildet ist, um abhängig von einer aus der Fahrzeuggeschwindigkeit ermittelten Fahrzeugbeschleunigung, dem Antriebsmoment des Motors (6), dem Betriebszustand der mindestens einen Dauerbremse (8) und den Informationen über das vorausfahrende Fahrzeug (2) den mindestens einen Regelungsparameter einzustellen.

13. Vorrichtung (3) nach Anspruch 12,
**dadurch gekennzeichnet, dass** die Auswertungs-, Einstell- und Regeleinheit (24) eine Logik-Einheit (26) umfasst, welche ausgebildet ist, um erfasste Grenzwertüber- und/oder -unterschreitungen der Fahrzeugbeschleunigung, des Antriebsmoments des Motors (6), des Betriebszustandes der mindestens einen Dauerbremse (8) und der Differenz zwischen einem Soll-Abstand zu dem vorausfahrenden Fahrzeug (2) und dem Ist-Abstand zu dem vorausfahrenden Fahrzeug (2) logisch zu verknüpfen und daraus den Regelungsparameter einzustellen.

14. Vorrichtung (3) nach Anspruch 13,
**gekennzeichnet durch** eine fünfte Sensiereinrichtung (22) zum Ermitteln des Zustandes mindestens einer Radbremse (4a, 4b, 4c, 4d),
wobei die Auswertungs-, Einstell- und Regeleinheit (24) auch den Zustand der mindestens einen Radbremse auswertet, die Logik-Einheit (26) erfasste Grenzwertüber- und/oder -unterschreitungen des Zustandes der mindestens einen Radbremse (4a, 4b, 4c, 4d) logisch mit den erfassten Grenzwertüber- und/oder - unterschreitungen der Fahrzeugbeschleunigung, des Antriebsmoments des Motors (6), des Betriebszustandes der mindestens einen Dauerbremse und der Differenz zwischen dem Soll-Abstand zu dem vorausfahrenden Fahrzeug (2) und dem Ist-Abstand zu dem vorausfahrenden Fahrzeug (2) verknüpft und daraus den Regelungsparameter einstellt.

15. Kraftfahrzeug (1) mit einer Vorrichtung (3) zur Regelung einer Längsdynamik gemäß einem der Ansprüche 12 bis 14 und/oder wobei die Vorrichtung zum Durchführen eines Verfahrens nach einem der Ansprüche 1 bis 11 eingerichtet, ausgelegt und/oder konstruiert ist.

## Claims

1. Method for automatically regulating the longitudinal dynamics of a motor vehicle, in particular of a utility vehicle, with the steps:
- determining a first state variable (102) that is dependent on the acceleration of the vehicle;
- determining a second state variable (104) that is dependent on the drive torque of the engine;
- determining a third state variable (106) that is dependent on the operating state of at least one permanent brake;
- determining information about a vehicle ahead (108);
- adjusting at least one regulating parameter of the regulation function (128); and
- regulating the longitudinal dynamics of the vehicle depending on the at least one regulating parameter (134);
and wherein the adjustment of the at least one regulating parameter of the regulation function (128) is carried out depending on the first, second and third state variables and the determined information about the vehicle ahead.

2. Method according to Claim 1,
**characterized by** the steps:
- determining if the first state variable is greater than and/or less than a limit value (112); and/or
- determining if the second state variable is greater than and/or less than a limit value (114); and/or
- determining if the third state variable is greater than and/or less than a limit value (116);
and wherein the adjustment of the at least one regulating parameter of the regulation function (128) is carried out depending on the first, second and/or third state variables being greater than and/or less than limit values.

3. Method according to Claim 2,
**characterized in that** the adjustment of the at least one regulating parameter of the regulation function (128) is carried out depending on a logical combination (120) of at least the first, second and/or third state variable being greater than and/or less than limit values.

4. Method according to Claim 3,
**characterized by** the steps:
- determining a fourth state variable that is dependent on at least one wheel brake; and
- determining if the fourth state variable is greater than and/or less than a limit value;
wherein the adjustment of the at least one regulating parameter of the regulation function (128) is carried out depending on a logical combination (120) of at least the first, second, third and/or fourth state variables being greater than and/or less than limit values.

5. Method according to any one or more of the preceding claims,
**characterized in that** the determination of information about the vehicle ahead (108) includes determining the speed and/or the acceleration of the vehicle ahead and/or determining the actual distance to the vehicle ahead.

6. Method according to any one or more of the preceding claims,
**characterized by** the step:
- derivation of information about the inclination state of the vehicle depending on the first, second and third state variables (122).

7. Method according to any one or more of the preceding claims,
**characterized in that** the determination of the third state variable (106) that is dependent on the operating state of at least one permanent brake includes determining the load of the at least one permanent brake.

8. Method according to any one or more of the preceding claims,
**characterized in that** the regulating parameter is increased or reduced if the first, second and third state variables are greater than and/or less than limit values and a target distance to the vehicle ahead is greater than an actual distance to the vehicle ahead.

9. Method according to Claim 8,
**characterized in that** the regulating parameter does not exceed a maximum value and does not fall below a minimum value and preferably remains constant on reaching the maximum value or the minimum value if the first, second and third state variables are greater than and/or less than limit values and the target distance to the vehicle ahead is greater than the actual distance to the vehicle ahead.

10. Method according to Claim 8 or Claim 9,
**characterized in that** the regulating parameter increases and/or reduces linearly, non-linearly and/or according to a defined function if the first, second and third state variables are greater than and/or less than limit values and the target distance to the vehicle ahead is greater than the actual distance to the vehicle ahead.

11. Method according to any one or more of Claims 8 to 10, **characterized in that** the regulating parameter of the regulation function is a gain factor and **characterized by** the steps:
- determining a speed difference relative to the vehicle ahead (130); and
- determining a target acceleration of the vehicle depending on the determined speed difference relative to the vehicle ahead and the set gain factor (132);
wherein the target acceleration is dependent on an increased speed difference relative to the vehicle ahead and the increase in the speed difference relative to the vehicle ahead is dependent on the gain factor and/or the target acceleration is a function of the determined speed difference and of the gain factor.

12. Device (3) for regulating the longitudinal dynamics of a motor vehicle (1), in particular of a utility vehicle, with
a first sensing device (14) for determining the speed of the vehicle,
a second sensing device (16) for determining the drive torque of the engine (6),
a third sensing device (18) for determining the operating state of at least one permanent brake (8),
a fourth sensing device (20) for determining information about a vehicle ahead (2), and
an analysis, adjustment and regulating unit (24) for analyzing the speed of the vehicle, the drive torque of the engine (6), the operating state of the at least one permanent brake (8) and the information about the vehicle ahead (2), adjusting at least one regulating parameter and regulating the longitudinal dynamics of the vehicle (1) depending on the at least one regulating parameter,
and wherein the analysis, adjustment and regulating unit (24) is designed to adjust the at least one regulating parameter depending on an acceleration of the vehicle determined from the speed of the vehicle, the drive torque of the engine (6), the operating state of the at least one permanent brake (8) and the information about the vehicle ahead (2).

13. Device (3) according to Claim 12,
**characterized in that** the analysis, adjustment and regulating unit (24) comprises a logic unit (26) that is designed to logically combine states of the acceleration of the vehicle, the drive torque of the engine (6), the operating state of the at least one permanent brake (8) and the difference between a target distance to the vehicle ahead (2) and the actual distance to the vehicle ahead (2) being greater than and/or less than a limit value and to adjust the regulating parameter depending thereon.

14. Device (3) according to Claim 13,
**characterized by** a fifth sensing device (22) for determining the state of at least one wheel brake (4a, 4b, 4c, 4d), wherein the analysis, adjustment and regulating unit (24) also analyzes the state of the at least one wheel brake and the logic unit (26) logically combines detected states of the at least one wheel brake (4a, 4b, 4c, 4d) being greater than and/or less than a limit value with states of the detected acceleration of the vehicle, the drive torque of the engine (6), the operating state of the at least one permanent brake and the difference between the target distance to the vehicle ahead (2) and the actual distance to the vehicle ahead (2) being greater than and/or less than limit values and adjusts the regulating parameter depending thereon.

15. Motor vehicle (1) with a device (3) for regulating the longitudinal dynamics according to any one of Claims 12 to 14 and/or wherein the device is configured, designed and/or constructed for carrying out a method according to any one of Claims 1 to 11.

## Revendications

1. Procédé de régulation automatique d'une dynamique longitudinale d'un véhicule automobile, notamment d'un véhicule utilitaire, comprenant les étapes consistant à :
- déterminer une première grandeur d'état (102) dépendant de l'accélération du véhicule ;
- déterminer une deuxième grandeur d'état (104) dépendant du couple moteur du moteur ;
- déterminer une troisième grandeur d'état (106) dépendant de l'état de fonctionnement d'au moins un frein permanent ;
- déterminer des informations concernant un véhicule précédent (108) ;
- régler au moins un paramètre de régulation de la régulation (128) ; et
- réguler la dynamique longitudinale du véhicule en fonction de l'au moins un paramètre de régulation (134) ; et
dans lequel le réglage de l'au moins un paramètre de régulation de la régulation (128) s'effectue en fonction des première, deuxième et troisième grandeurs d'état et des informations déterminées concernant le véhicule précédent.

2. Procédé selon la revendication 1,
**caractérisé par** les étapes consistant à :
- déterminer un dépassement et/ou un abaissement en-dessous d'une valeur limite de la première grandeur d'état (112) ; et/ou
- déterminer un dépassement et/ou un abaissement en-dessous d'une valeur limite de la deuxième grandeur d'état (114) ; et/ou
- déterminer un dépassement et/ou un abaissement en-dessous d'une valeur limite de la troisième grandeur d'état (116) ;
et dans lequel le réglage de l'au moins un paramètre de régulation de la régulation (128) s'effectue en fonction des dépassements et/ou des abaissements en-dessous des valeurs limites des première, deuxième et/ou troisième grandeurs d'état.

3. Procédé selon la revendication 2,
**caractérisé en ce que** le réglage de l'au moins un paramètre de régulation de la régulation (128) s'effectue en fonction d'une combinaison logique (120) d'au moins les dépassements et/ou les abaissements en-dessous des valeurs limites des première, deuxième et/ou troisième grandeurs d'état.

4. Procédé selon la revendication 3,
**caractérisé par** les étapes consistant à :
- déterminer une grandeur d'état dépendant d'au moins un frein de roue ; et
- déterminer des dépassements et/ou des abaissements en-dessous d'une valeur limite de la quatrième grandeur d'état ;
dans lequel le réglage de l'au moins un paramètre de régulation de la régulation (128) s'effectue en fonction d'une combinaison logique (120) d'au moins les dépassements et/ou les abaissements en-dessous des valeurs limites des première, deuxième, troisième et/ou quatrième grandeurs d'état.

5. Procédé selon l'une quelconque des revendications précédentes,
**caractérisé en ce que** la détermination d'informations concernant le véhicule précédent (108) comprend la détermination de la vitesse et/ou de l'accélération du véhicule précédent et/ou la détermination de la distance réelle par rapport au véhicule précédent.

6. Procédé selon l'une quelconque des revendications précédentes,
**caractérisé par** l'étape consistant à :
- déduire des informations concernant l'état d'inclinaison du véhicule en fonction des première, deuxième et troisième grandeurs d'état (122).

7. Procédé selon l'une quelconque des revendications précédentes,
**caractérisé en ce que** la détermination de la troisième grandeur d'état (106) dépendant de l'état de fonctionnement d'au moins un frein permanent comprend la détermination du taux d'utilisation de l'au moins un frein permanent.

8. Procédé selon l'une quelconque des revendications précédentes,
**caractérisé en ce que** le paramètre de régulation augmente ou diminue lorsque des dépassements et/ou des abaissements en-dessous de valeurs limites des première, deuxième et troisième grandeurs d'état se produisent et lorsqu'une distance théorique par rapport au véhicule précédent est supérieure à une distance réelle par rapport au véhicule précédent.

9. Procédé selon la revendication 8,
**caractérisé en ce que** le paramètre de régulation ne dépasse pas une valeur maximale et ne s'abaisse pas en-dessous d'une valeur minimale et **en ce qu'**il reste de préférence constant, une fois la valeur maximale ou la valeur minimale atteinte, lorsque des dépassements et/ou des abaissements en-dessous des valeurs limites des première, deuxième et troisième grandeurs d'état se produisent et lorsque la distance théorique par rapport au véhicule précédent est supérieure à la distance réelle par rapport au véhicule précédent.

10. Procédé selon la revendication 8 ou la revendication 9,
**caractérisé en ce que** le paramètre de régulation augmente et/ou diminue linéairement, non linéairement et/ou selon une fonction définie, lorsque des dépassements et/ou des abaissements en-dessous des valeurs limites des première, deuxième et troisième grandeurs d'état se produisent et lorsque la distance théorique par rapport au véhicule précédent est supérieure à la distance réelle par rapport au véhicule précédent.

11. Procédé selon l'une quelconque des revendications 8 à 10,
**caractérisé en ce que** le paramètre de la régulation est un facteur d'amplification et **en ce qu'**il comprend les étapes consistant à :
- déterminer une différence de vitesse par rapport au véhicule précédent (130) ; et
- déterminer une accélération théorique du véhicule en fonction de la différence de vitesse déterminée par rapport au véhicule précédent et du facteur d'amplification réglé (132) ;
dans lequel l'accélération théorique dépend d'une différence de vitesse amplifiée par rapport au véhicule précédent et dans lequel l'amplification de la différence de vitesse par rapport au véhicule précédent dépend du facteur d'amplification et/ou dans lequel l'accélération théorique est une fonction de la différence de vitesse déterminée et du facteur d'amplification.

12. Dispositif (3) de régulation d'une dynamique longitudinale d'un véhicule automobile (1), notamment d'un véhicule utilitaire, comprenant :
un premier équipement de détection (14) destiné à déterminer la vitesse du véhicule,
un deuxième équipement de détection (16) destiné à déterminer le couple moteur du moteur (6),
un troisième équipement de détection (18) destiné à déterminer l'état de fonctionnement d'au moins un frein permanent (8),
un quatrième équipement de détection (20) destiné à déterminer des informations concernant un véhicule précédent (2), et
une unité d'évaluation, de réglage et de régulation (24) destinée à évaluer la vitesse du véhicule, le couple moteur du moteur (6), l'état de fonctionnement de l'au moins un frein permanent (8) et les informations concernant le véhicule précédent (2), pour régler au moins un paramètre de régulation et pour réguler la dynamique longitudinale du véhicule (1) en fonction de l'au moins un paramètre de régulation, et
dans lequel l'unité d'évaluation, de réglage et de régulation (24) est conçue pour régler l'au moins un paramètre de régulation en fonction d'une accélération du véhicule déterminée à partir de la vitesse du véhicule, du couple moteur du moteur (6), de l'état de fonctionnement de l'au moins un frein permanent (8) et des informations concernant le véhicule précédent (2).

13. Dispositif (3) selon la revendication 12,
**caractérisé en ce que** l'unité d'évaluation, de réglage et de régulation (24) comprend une unité logique (26) qui est conçue pour combiner logiquement des dépassements et/ou des abaissements en-dessous de valeurs limites détectés de l'accélération du véhicule, du couple moteur du moteur (6), de l'état de fonctionnement de l'au moins un frein permanent (8) et de la différence entre une distance théorique par rapport au véhicule précédent (2) et la distance réelle par rapport au véhicule précédent (2) et pour régler à partir de ces combinaisons le paramètre de régulation.

14. Dispositif (3) selon la revendication 13,
**caractérisé par** un cinquième équipement de détection (22) destiné à déterminer l'état d'au moins un frein de roue (4a, 4b, 4c, 4d),
dans lequel l'unité d'évaluation, de réglage et de régulation (24) évalue également l'état de l'au moins un frein de roue, dans lequel l'unité logique (26) combine logiquement des dépassements et/ou des abaissements en-dessous de valeurs limites détectés de l'état de l'au moins un frein de roue (4a, 4b, 4c, 4d) logiquement avec les dépassements et/ou les abaissements en-dessous de valeurs limites détectés de l'accélération du véhicule, du couple moteur du moteur (6), de l'état de fonctionnement de l'au moins un frein permanent et de la différence entre la distance théorique par rapport au véhicule précédent (2) et la distance réelle par rapport au véhicule précédent (2) et règle à partir de ces combinaisons le paramètre de régulation.

15. Véhicule automobile (1) comprenant un dispositif (3) de régulation d'une dynamique longitudinale selon l'une quelconque des revendications 12 à 14 et/ou dans lequel le dispositif est conçu, configuré et/ou construit de manière à mettre en oeuvre un procédé selon l'une quelconque des revendications 1 à 11.
